# FASCICULE DE BREVET EUROPEEN

(11) **EP 3 227 658 B1**
(45) Date de publication et mention de la délivrance du brevet: **31.07.2019**
(21) Numéro de dépôt: 15817466.4
(22) Date de dépôt: 02.12.2015
(51) Int. Cl.: G01N 1/12, G01N 1/10

(54) **PROCEDE ET DISPOSITIF DE PRELEVEMENT D'ECHANTILLON DANS UN LIQUIDE**
VERFAHREN UND VORRICHTUNG ZUM ENTZIEHEN EINER PROBE AUS EINER FLÜSSIGKEIT
METHOD AND DEVICE FOR WITHDRAWING A SAMPLE FROM A LIQUID

(30) Priorité: 05.12.2014 FR 1462006
(43) Date de publication de la demande: 11.10.2017
(73) Titulaire: Commissariat à l'Énergie Atomique et aux Énergies Alternatives, 75015 Paris (FR)
(72) Inventeur: RODIAC, Frédéric, 13105 Mimet (FR)
(74) Mandataire: Marchand, André
(86) Numéro de dépôt international: PCT/FR2015/053300
(87) Numéro de publication internationale: WO 2016/087782

(56) Documents cités:
- EP-A1- 2 500 277
- GB-A- 958 916
- GB-A- 2 032 885
- US-A- 2 294 655

## Description

### DOMAINE TECHNIQUE

La présente invention est relative à un dispositif de prélèvement d'un échantillon de liquide, en particulier un dispositif de prélèvement d'un échantillon de liquide, en particulier d'eau, dans une piscine d'un réacteur nucléaire ou dans un réservoir d'entreposage de combustible nucléaire, et à un procédé de prélèvement à l'aide d'un tel dispositif.

### ETAT DE LA TECHNIQUE

Le liquide des bacs d'entreposage de matière combustible et des piscines de réacteur, en général de l'eau, qui est susceptible d'être contaminé(e), doit faire l'objet de contrôles radiologiques et/ou chimiques périodiques.

Les prélèvements d'eau peuvent être réalisés au moyen d'un pot fixé sur une gaffe pour être plongé à la profondeur de prélèvement souhaitée, et dont le contenu peut être remonté en surface puis transvasé dans une bouteille qui est envoyée à un laboratoire d'analyse.

Le brevet US5686673 décrit un dispositif de prélèvement d'échantillons de liquide à une ou plusieurs profondeur(s) souhaitée(s). Ce dispositif comporte un boîtier fermé par un capuchon pour former un conteneur étanche renfermant des chambres d'échantillonnage solidarisées au capuchon. Le dispositif comporte un conduit d'entrée pour chaque chambre d'échantillonnage, qui traverse le capuchon et débouche dans la chambre d'échantillonnage par son extrémité inférieure.

Le dispositif comporte en outre au moins un conduit d'échappement qui s'étend au travers du capuchon et dont l'extrémité supérieure (externe au conteneur) s'étend au dessus des extrémités supérieures (externes au conteneur) des conduits d'entrée, pour favoriser l'entrée d'eau dans les chambres d'échantillonnage par l'intermédiaire des conduits d'entrée, lorsque le dispositif est plongé dans l'eau.

Des orifices de surverse sont prévus dans les chambres d'échantillonnage, dans le capuchon, ou dans des organes de fixation des chambres d'échantillonnage au capuchon, pour permettre au liquide ayant rempli une chambre d'échantillonnage, de s'écouler dans le conteneur étanche.

Ce dispositif comporte également, pour chaque conduit d'entrée, un organe de fermeture étanche tel qu'un bouchon, qui permet d'obturer l'extrémité supérieure du conduit d'entrée. Le dispositif comporte aussi un organe de retrait des organes de fermeture, tel qu'un câble, qui est relié aux organes de fermeture et permet d'ouvrir le(s) conduit(s) d'entrée lorsque le dispositif de prélèvement est plongé à la profondeur de prélèvement souhaitée.

Le dispositif comporte une barre de suspension en forme d'arche qui est solidaire du capuchon, s'étend au dessus de celui-ci, et facilite la manipulation et le positionnement du dispositif par l'intermédiaire de cette barre de suspension.

Lorsque les prélèvements ont été effectués, le dispositif est remonté à la surface du liquide, puis le capuchon est séparé du boîtier. Les chambres d'échantillonnage sont séparées du capuchon, fermées, et envoyées à un laboratoire.

Un tel dispositif n'est pas adapté au prélèvement de liquide susceptible d'être contaminé, car le liquide prélevé s'écoule à l'extérieur de la chambre d'échantillonnage et peut contaminer la face externe de cette chambre ainsi que le boîtier.

GB958916 divulgue un dispositif de prélèvement d'un échantillon dans un liquide avec un conteneur et un flacon. US 2294655 divulgue un container de prélèvement d'un échantillon avec un isolation d'un flacon par un capuchon. GB2032885 divulgue une système pour manipuler les bouchons, monté a l'extérieur du liquide. EP2500277 divulgue une méthode pour obtenir un ciel gazeux dans un flacon.

### EXPOSÉ DE L'INVENTION

Un objectif de l'invention est de proposer un procédé et un dispositif de prélèvement d'un échantillon de liquide, en particulier un procédé et un dispositif de prélèvement d'un échantillon de liquide dans une piscine d'un réacteur nucléaire ou dans un bac d'entreposage de combustible nucléaire, qui soient améliorés et/ou qui remédient, en partie au moins, aux lacunes ou inconvénients des procédés et dispositifs connus de prélèvement d'un échantillon de liquide.

Selon un aspect de l'invention, il est proposé un dispositif de prélèvement d'un échantillon dans un liquide, qui comporte :
- un conteneur comportant un boîtier fermé par un capuchon et renfermant au moins un flacon d'échantillonnage ;
- au moins un conduit d'entrée pour chaque flacon d'échantillonnage, qui traverse le capuchon et débouche dans le flacon d'échantillonnage par son extrémité inférieure ;
- au moins un conduit d'échappement qui s'étend au travers du capuchon et dont l'extrémité supérieure s'étend au dessus de l'extrémité (des extrémités) supérieure(s) du (des) conduit(s) d'entrée ;
- pour chaque conduit d'entrée, un premier organe de fermeture (étanche), tel qu'un bouchon, qui permet d'obturer l'extrémité supérieure du conduit d'entrée ;
- au moins un premier organe de retrait du premier organe (des premiers organes) de fermeture du (des) conduit(s) d'entrée, qui est relié audit (auxdits) premier(s) organe(s) de fermeture et permet d'ouvrir le(s) conduit(s) d'entrée lorsque le dispositif de prélèvement est plongé à la profondeur de prélèvement souhaitée ;
le dispositif de prélèvement comportant, pour chaque flacon d'échantillonnage, des moyens d'étanchéité agencés pour isoler le flacon du conteneur, et dans lequel, pour chaque flacon, une extrémité inférieure du conduit d'échappement débouche dans le flacon sous l'embouchure du flacon, de façon à permettre le maintien d'un ciel gazeux dans le flacon, au dessus du liquide prélevé dans le flacon, et à prévenir un remplissage complet du flacon par le liquide prélevé.

Le (chaque) conduit d'entrée débouche à l'extérieur du conteneur par son extrémité supérieure, et le (chaque) conduit d'échappement débouche également à l'extérieur du conteneur par son extrémité supérieure.

Les moyens d'étanchéité servant à isoler le flacon du conteneur peuvent comporter un organe d'étanchéité, en particulier au moins un joint plat et/ou torique, qui est disposé - et généralement pincé - entre l'embouchure du flacon et le capuchon.

Pour maintenir un ciel gazeux dans le flacon, en particulier pour retenir un volume d'air au dessus du liquide prélevé dans le flacon, le dispositif de prélèvement peut être tel que, pour chaque flacon, une extrémité inférieure du conduit d'échappement débouche dans le flacon soit au niveau de l'extrémité inférieure du conduit d'entrée correspondant, soit au dessus de l'extrémité inférieure du conduit d'entrée.

Ainsi, lorsque le niveau du liquide pénétrant dans le flacon par le conduit d'entrée atteint l'extrémité inférieure du conduit d'échappement, l'échappement par le conduit d'échappement du gaz (en particulier l'air) présent dans le flacon s'interrompt, et le remplissage du flacon peut se poursuivre jusqu'à ce que la pression du gaz « piégé » dans le flacon entre la partie du capuchon obturant l'embouchure du flacon, et le liquide prélevé, atteigne la pression du liquide à l'extérieur du conteneur.

Les choix des positions respectives des orifices inférieurs des conduits d'entrée et d'échappement dans le flacon, permettent ainsi d'obtenir un taux (autrement dit un niveau) de remplissage déterminé du flacon par le liquide prélevé.

La pression du ciel gazeux ainsi maintenu dans le flacon, s'équilibre avec la pression d'immersion lorsque le dispositif de prélèvement est remonté à la surface, en refoulant le cas échéant une partie du liquide prélevé dans le conduit d'entrée, ce qui permet d'éviter la pénétration de liquide dans le flacon par le conduit d'entrée pendant cette remontée, à une profondeur différente de celle à laquelle le liquide a été prélevé, et permet donc d'éviter la « pollution » de l'échantillon de liquide prélevé, par du liquide présent à une profondeur différente de celle du prélèvement.

De préférence, le dispositif de prélèvement comporte, pour chaque conduit d'échappement, un second organe de fermeture (étanche), tel qu'un bouchon, qui permet d'obturer l'extrémité supérieure du conduit d'échappement, ainsi qu'un second organe de retrait du second organe (des seconds organes) de fermeture, tel qu'un câble ou une tige, qui est relié(e) audit second organe (auxdits seconds organes) de fermeture et permet d'ouvrir le(s) conduit(s) d'échappement lorsque le dispositif de prélèvement est plongé à la profondeur de prélèvement souhaitée.

Dans ce cas, le second organe de retrait est de préférence lié - en particulier rigidement lié - au premier organe de retrait, de sorte que l'organe (les organes) de fermeture du (des) conduit(s) d'entrée et l'organe (les organes) de fermeture du (des) conduit(s) d'échappement peuvent être ouverts (respectivement fermés) par une action unique d'un opérateur sur les organes de retrait, qui provoque un dégagement de chaque organe de fermeture par rapport à (en particulier hors de) l'orifice d'entrée du conduit correspondant.

Les organes de fermeture des conduits d'entrée et d'échappement sont généralement conçus et agencés pour pouvoir fermer les orifices d'entrée de ces conduits, de façon étanche au liquide dans lequel le dispositif de prélèvement est immergé, à une pression correspondant à la profondeur maximale d'immersion du dispositif.

Pour leur part, les moyens d'étanchéité servant à isoler le flacon du conteneur sont généralement conçus et agencés pour séparer le contenu et/ou le volume du flacon considéré, du contenu et/ou volume du conteneur recevant le(s) flacon(s), de façon étanche au gaz (en particulier l'air) contenu dans le flacon et le conteneur, à une pression correspondant également à la profondeur maximale d'immersion du dispositif.

Le dispositif peut comporter une structure de suspension qui est solidaire du conteneur, qui s'étend au dessus du capuchon, et qui permet la manipulation et le positionnement du dispositif.

Dans ce cas, une partie au moins des organes de retrait des organes de fermeture des conduits d'entrée et d'échappement, peut être montée coulissante le long de la structure de suspension.

Selon des modes de réalisation, l'un au moins des organes de fermeture des conduits d'entrée et d'échappement, comporte une portion en forme de pointe apte à assurer une ouverture progressive de l'extrémité du conduit.

Selon un autre aspect de l'invention, pour prélever un échantillon dans un liquide, en particulier pour prélever un échantillon d'eau dans une piscine d'un réacteur nucléaire ou dans un réservoir d'entreposage de combustible nucléaire, on utilise un dispositif selon l'invention.

L'invention permet d'obtenir simplement un remplissage partiel d'un ou plusieurs flacon(s), qui peut être remonté en surface, puis être sorti du conteneur et fermé, sans renversement ou débordement du liquide formant l'échantillon qui est contenu dans chaque flacon.

L'invention permet d'améliorer l'opération de prélèvement de liquide, en particulier la précision du volume prélevé, la précision de la profondeur de prélèvement, l'absence de pollution du prélèvement, la propreté extérieure du prélèvement réalisé et du flacon contenant l'échantillon prélevé.

L'invention permet d'obtenir un prélèvement de liquide précis, directement dans un contenant (flacon) standardisé, sans manipulation ultérieure comme le transvasement du liquide prélevé.

Le flacon reste propre extérieurement pour les manipulations d'analyses réalisées en laboratoire.

D'autres aspects, caractéristiques, et avantages de l'invention apparaissent dans la description suivante qui se réfère aux figures annexées et illustre, sans aucun caractère limitatif, des modes préférés de réalisation de l'invention.

### BREVE DESCRIPTION DES FIGURES

La figure 1 illustre en perspective un dispositif de prélèvement selon un mode de réalisation.
La figure 2 illustre, en vue en coupe longitudinale selon un premier plan, le dispositif de prélèvement illustré figure 1, dans une configuration de fermeture des orifices d'entrée des conduits d'entrée et d'échappement, et est une vue selon A-A de la figure 5.
La figure 3 illustre, en vue en coupe longitudinale selon un second plan perpendiculaire au premier plan, le dispositif de prélèvement illustré figures 1 et 2, et est une vue selon B-B de la figure 5.
La figure 4 illustre, en vue en coupe longitudinale selon le premier plan, le dispositif de prélèvement illustré figure 1, dans une configuration d'ouverture des orifices d'entrée des conduits d'entrée et d'échappement.
La figure 5 illustre, en vue de dessus, le dispositif de prélèvement illustré figures 1 à 4.

### DESCRIPTION DETAILLEE DE L'INVENTION

Sauf indication explicite ou implicite contraire, des éléments ou organes - structurellement ou fonctionnellement - identiques ou similaires, sont désignés par des repères identiques sur les différentes figures.

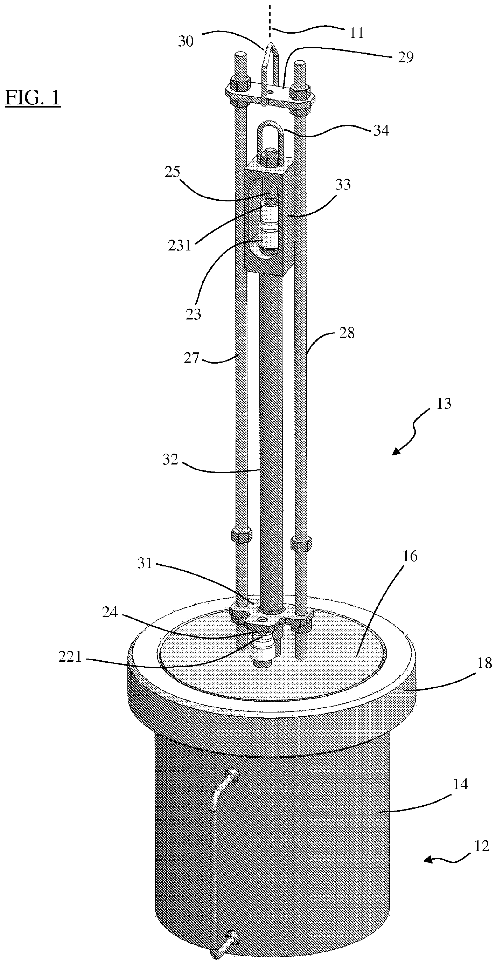

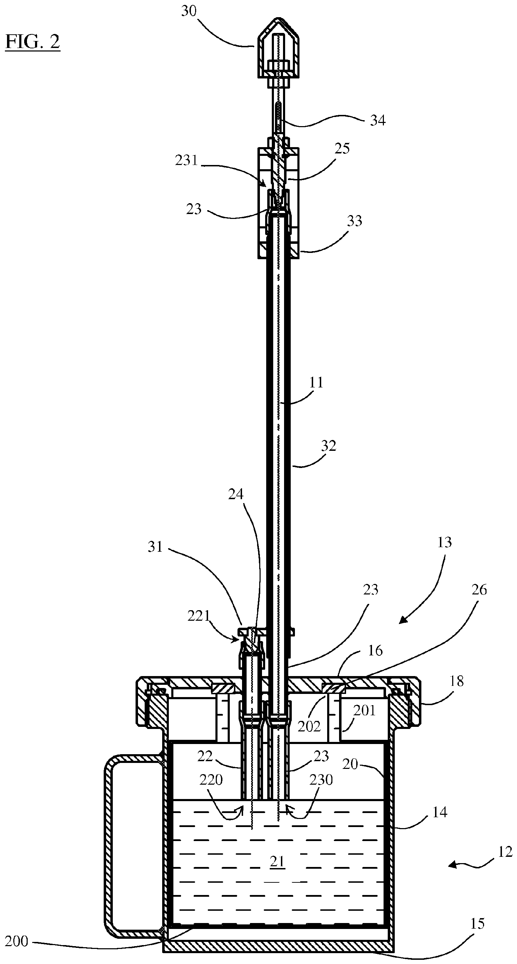

Sauf indication explicite ou implicite contraire, les termes « inférieur », « supérieur », « au dessus », « sous », et « en dessous » sont utilisés par référence à un observateur observant le dispositif de prélèvement dont l'axe longitudinal est sensiblement vertical et dont l'embouchure du flacon d'échantillonnage est dirigée vers le haut, comme dans les positions illustrées figures 1 à 4.

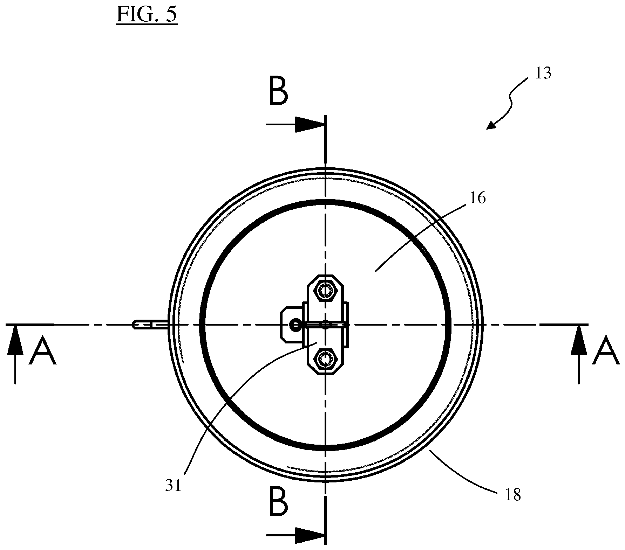

Les figures 1 à 5 illustrent un appareil 10 de prélèvement d'un échantillon dans un liquide, qui présente un axe longitudinal 11.

Le dispositif 10 comporte un conteneur comportant un boîtier 12 fermé par un capuchon 13 et renfermant un flacon 20 d'échantillonnage servant à recueillir le liquide 21 prélevé.

Le boîtier 12 comporte une paroi latérale 14 cylindrique d'axe 11 et de section circulaire, qui est ouverte à son extrémité supérieure 140 et est fermée à son extrémité inférieure par une paroi 15 de fond.

La masse et/ou l'épaisseur de la paroi 15 peut être choisie suffisamment élevée pour conférer une flottabilité négative au dispositif 10 dans son ensemble, et pour que le centre de gravité du dispositif soit suffisamment bas de sorte que l'axe longitudinal 11 conserve une orientation sensiblement verticale lorsque le dispositif 10 est plongé dans le liquide en étant suspendu par la structure de suspension décrite ci après.

Le capuchon 13 comporte une paroi 16 en forme générale de disque d'axe 11, qui recouvre l'embouchure 140 du boîtier 12, et qui comporte une rainure annulaire recevant un joint torique 17 assurant l'étanchéité de la fermeture du boîtier 12 par la paroi 16 lorsque cette paroi est plaquée contre l'embouchure 140 du boîtier, assurant l'absence de rentrée de liquide à l'intérieur du conteneur, notamment l'absence de contamination du flacon 20 disposé à l'intérieur du conteneur.

A cet effet, le conteneur comporte une couronne 18 de profil en forme de « L », qui s'appuie sur la périphérie de la paroi 16 et qui est vissée sur un filetage 19 prévu sur la face externe de l'extrémité supérieure du boîtier.

Lorsque, comme illustré sur les figures, le dispositif 10 comporte un unique flacon 20 de prélèvement, ce flacon peut présenter une forme et des dimensions choisies pour que le flacon s'engage avec un faible jeu dans le boîtier 12.

Mais cet exemple n'est pas limitatif et le dispositif peut comporter notamment plusieurs flacons de prélèvement.

Le flacon 20 présente, dans cette illustration, une paroi latérale cylindrique d'axe 11 et un fond 200 reposant sur le fond 15 du boîtier 12 par l'intermédiaire d'un support compressible (non représenté) en forme de disque par exemple.

La partie supérieure de la paroi latérale du flacon 20 forme un col 201 terminé par une embouchure 202 qui peut être circulaire.

La face inférieure de la paroi 16 du capuchon 13 s'appuie sur l'embouchure 202 du flacon par l'intermédiaire d'un joint plat 26 qui isole le flacon du conteneur en assurant l'étanchéité de la séparation (l'interface) entre le volume délimité par le flacon 20 et celui délimité par le conteneur 12, 13.

Le dispositif 10 comporte un conduit 22 d'entrée qui permet l'introduction du liquide dans lequel est plongé le dispositif 10, par l'extrémité supérieure 221 du conduit 22, à l'intérieur du flacon.

Le conduit 22 s'étend parallèlement à l'axe 11, traverse la paroi 16 du capuchon, et débouche dans le flacon 20 d'échantillonnage par son extrémité inférieure 220.

Le dispositif 10 comporte également un conduit 23 d'échappement s'étendant selon l'axe 11, qui permet l'échappement du gaz contenu dans le flacon au cours de son remplissage par le liquide prélevé.

Le conduit 23 s'étend selon l'axe 11, au travers de la paroi 16 du capuchon, et présente une extrémité supérieure 231 qui s'étend au dessus de l'extrémité supérieure 221 du conduit d'entrée 22.

Typiquement, lorsque le dispositif est plongé dans de l'eau ou dans un liquide de même densité, si une hauteur (mesurée selon l'axe 11) de l'ordre de 200 millimètres sépare les extrémités supérieures 221, 231, la différence entre les pressions d'immersion régnant respectivement au voisinage de ces deux extrémités, sera voisine de 2^{∗}10⁻² bar.

Une telle différence de pression peut être suffisante pour assurer le prélèvement dans les conditions souhaitées.

Le dispositif 10 comporte en outre un premier bouchon 24 et un second bouchon 25, qui servent respectivement à obturer l'extrémité supérieure 221 du conduit d'entrée 22 et l'extrémité supérieure 231 du conduit d'échappement 23.

Le dispositif 10 comporte également une structure de suspension qui permet la manipulation et le positionnement du dispositif, ainsi que le guidage d'un organe 31 de retrait du premier bouchon 24.

Cette structure de suspension comporte deux tiges 27, 28 parallèles à l'axe 11, qui sont fixées par leurs bases à la paroi 16 du capuchon 13.

La structure de suspension comporte également une platine 29 reliant les parties supérieures des tiges 27, 28, ainsi qu'une anse 30 fixée à la platine 29 et servant à suspendre l'appareil 10 à un câble ou à un appareil de manutention servant à déplacer le dispositif 10.

Comme illustré figure 1 notamment, le bouchon 24 d'obturation du conduit 22 est fixé à une pièce 31 en forme de plaque qui est montée coulissante, selon l'axe 11, le long des tiges 27, 28.

La pièce 31 est fixée à l'extrémité inférieure d'un tube 32 monté coulissant (selon l'axe 11) autour du conduit d'échappement 23.

Une pièce 33 entourant l'extrémité supérieure 231 du conduit d'échappement 23, est fixée à l'extrémité supérieure du tube 32, et reçoit une seconde anse 34 susceptible d'être liée à un organe de commande des bouchons 24, 25, tel qu'un câble : une action de traction verticale ascendante sur l'anse 34 permet de faire coulisser vers le haut la structure comportant les pièces 31 à 34, ce qui provoque le coulissement vers le haut des bouchons 24, 25, provoquant l'ouverture des extrémités supérieures 221, 231 respectives des conduits 22, 23.

Inversement, l'interruption de cette traction permet le coulissement vers le bas des bouchons 24, 25, par gravité, et la fermeture des conduits 22, 23 par ces bouchons.

La structure 31 à 34, qui est reliée aux organes 24, 25 de fermeture des conduits d'entrée et d'échappement, permet ainsi le retrait de ces organes des extrémités des conduits, pour permettre l'entrée de liquide dans le flacon et l'échappement de l'air du flacon, lorsque le dispositif de prélèvement est plongé à la profondeur de prélèvement souhaitée.

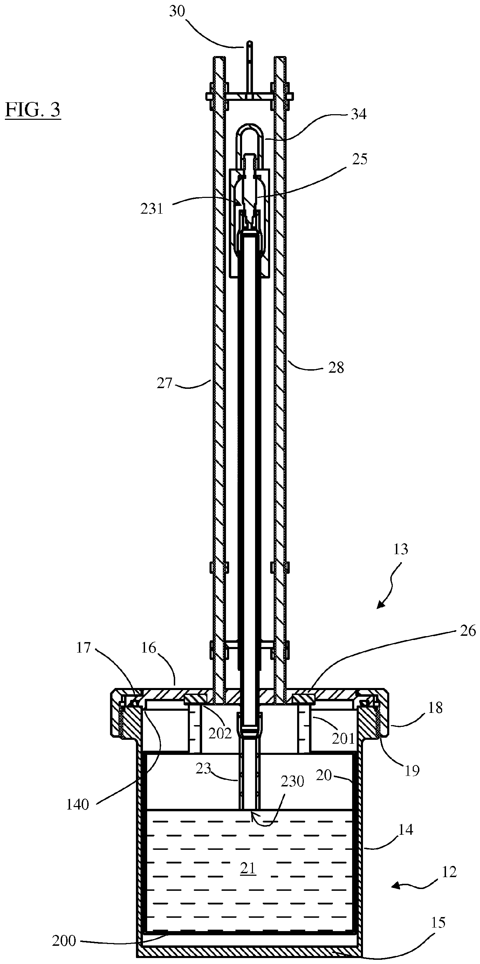

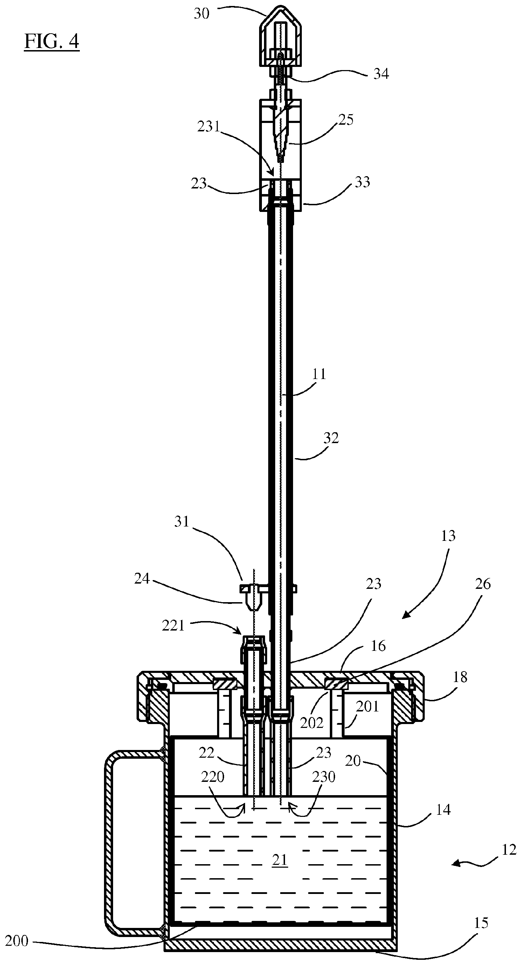

Dans un mode de réalisation avantageux, la partie du bouchon 25 conçue pour pénétrer dans la partie supérieure du conduit 23 comporte, en section longitudinale, une forme de pointe assurant une ouverture progressive de l'extrémité du conduit 23, au fur et à mesure de la sortie de cette partie du bouchon hors du conduit (cf. figures 3 et 4).

Par comparaison, la partie du bouchon 24 conçue pour pénétrer dans la partie supérieure du conduit 22 comporte, en section longitudinale, une forme tronquée plus compacte susceptible de provoquer, sensiblement instantanément, une ouverture complète de l'extrémité du conduit 22, lorsque cette partie du bouchon est déplacée par la pièce 31 pour être extraite du conduit 22.

Une telle ouverture progressive du conduit 23 par le retrait du bouchon 25 peut favoriser et accélérer l'amorçage « naturel » du remplissage (du flacon) au travers de l'orifice 221 du conduit 22, et peut réduire le temps de remplissage du flacon.

Un procédé de prélèvement d'eau dans une piscine de réacteur à l'aide du dispositif 10 de prélèvement, peut comporter les opérations suivantes :
- on immerge le dispositif 10 dans l'eau après avoir actionné la structure 31 à 34 de commande de fermeture pour fermer les conduits 22, 23 par les bouchons 24, 25 ;
- lorsque l'extrémité supérieure 221 du conduit 22 a atteint la profondeur de prélèvement souhaitée, on fait coulisser vers le haut la structure 31 à 34 de commande pour provoquer l'ouverture des extrémités supérieures 221, 231 des conduits 22, 23 ;
- le remplissage du flacon 20 par le conduit d'entrée 22 et l'échappement de l'air présent dans le flacon par le conduit 23, s'effectuent tant que le niveau de l'eau dans le flacon n'atteint pas l'extrémité inférieure 230 du conduit 23 ;
- le remplissage du flacon peut se poursuivre jusqu'à ce que la pression de l'air « piégé » dans le flacon entre l'embouchure du flacon et le liquide prélevé, atteigne la pression du liquide à l'extérieur du conteneur ; l'extrémité inférieure du conduit 23 étant disposée sous l'embouchure du flacon, le ciel gazeux maintenu dans le flacon, au dessus du liquide prélevé dans le flacon, permet de prévenir un remplissage complet du flacon par le liquide prélevé ;
- on peut alors faire coulisser vers le bas la structure 31 à 34 de commande pour provoquer la fermeture des extrémités supérieures des conduits 22, 23, puis extraire le dispositif hors de l'eau, extraire ensuite le flacon du conteneur 12, 13, sans faire déborder l'eau contenue dans le flacon qui peut alors être fermé et transporté vers un laboratoire d'analyse de l'échantillon prélevé.

## Revendications

1. Dispositif (10) de prélèvement d'un échantillon (21) dans un liquide, qui comporte :
- un conteneur comportant un boîtier (12) fermé par un capuchon (13,16) et renfermant au moins un flacon (20) d'échantillonnage ;
- au moins un conduit (22) d'entrée pour chaque flacon d'échantillonnage, qui traverse le capuchon et débouche dans le flacon (20) par son extrémité inférieure (220) ;
- au moins un conduit (23) d'échappement qui traverse le capuchon et dont l'extrémité supérieure (231) s'étend au dessus de l'extrémité (des extrémités) (221) supérieure(s) du (des) conduit(s) d'entrée (22) ;
- pour chaque conduit d'entrée, un premier organe (24) de fermeture, tel qu'un bouchon, qui permet d'obturer l'extrémité supérieure (221) du conduit d'entrée ;
- au moins un premier organe (31) de retrait du premier organe (des premiers organes) de fermeture du (des) conduit(s) d'entrée, qui est relié au dit (aux dits) premier(s) organe(s) de fermeture et permet d'ouvrir le(s) conduit(s) d'entrée (22) lorsque le dispositif (10) de prélèvement est plongé à la profondeur de prélèvement souhaitée ; le dispositif (10) étant **caractérisé**
**en ce qu'**il comporte, pour chaque flacon, des moyens (26) d'étanchéité agencés pour isoler le flacon (20) du conteneur (12, 13), et en ce que, pour chaque flacon, une extrémité inférieure (230) du conduit d'échappement (23) débouche dans le flacon (20) sous l'embouchure (202) du flacon, de façon à permettre le maintien d'un ciel gazeux dans le flacon, au dessus du liquide (21) prélevé dans le flacon, et à prévenir un remplissage complet du flacon par le liquide prélevé.

2. Dispositif selon la revendication 1 dans lequel les moyens d'étanchéité comportent un organe (26) d'étanchéité, en particulier un joint plat, qui peut être disposé - et pincé - entre l'embouchure (202) du flacon (20) et le capuchon (13, 16).

3. Dispositif selon la revendication 1 ou 2 dans lequel le (chaque) conduit d'entrée (22) débouche à l'extérieur du conteneur (12, 13, 16) par son extrémité supérieure (221), et dans lequel le (chaque) conduit d'échappement (23) débouche à l'extérieur du conteneur (12, 13, 16) par son extrémité supérieure (231).

4. Dispositif selon l'une quelconque des revendications 1 à 3 dans lequel, pour chaque flacon, une extrémité inférieure (230) du conduit d'échappement débouche dans le flacon au niveau de l'extrémité inférieure (220) du conduit d'entrée (22) correspondant, ou au dessus de l'extrémité inférieure (220) du conduit d'entrée.

5. Dispositif selon l'une quelconque des revendications 1 à 4 qui comporte, pour chaque conduit d'échappement, un second organe (25) de fermeture, tel qu'un bouchon, qui permet d'obturer l'extrémité supérieure du conduit d'échappement (23), ainsi qu'un second organe (33, 34) de retrait du second organe (des seconds organes) de fermeture, qui est relié(e) au dit second organe (aux dits seconds organes) de fermeture et permet d'ouvrir le(s) conduit(s) d'échappement (23) lorsque le dispositif de prélèvement est plongé à la profondeur de prélèvement souhaitée.

6. Dispositif selon la revendication 5 dans lequel le second organe de retrait (33, 34) est lié - en particulier rigidement lié - au (premier) organe de retrait (31), de sorte que l'organe (les organes) de fermeture du (des) conduit(s) d'entrée et l'organe (les organes) de fermeture du (des) conduit(s) d'échappement peuvent être ouverts (respectivement fermés) par une action unique d'un opérateur sur les organes (31 à 34) de retrait.

7. Dispositif selon l'une quelconque des revendications 1 à 6 qui comporte en outre une structure (27 à 30) de suspension solidaire du conteneur et permettant la manipulation et le positionnement du dispositif (10).

8. Dispositif selon la revendication 7 dans lequel une partie au moins des organes de retrait (31, 33, 34) des organes de fermeture des conduits (22, 23), est montée coulissante le long de la structure (27 à 30) de suspension.

9. Dispositif selon l'une quelconque des revendications 5 ou 6, dans lequel la partie du bouchon 25 conçue pour pénétrer dans la partie supérieure du conduit 23 comporte, en section longitudinale, une forme de pointe assurant une ouverture progressive de l'extrémité du conduit 23, au fur et à mesure de la sortie de cette partie du bouchon hors du conduit.

10. Procédé de prélèvement d'un échantillon dans un liquide, en particulier de prélèvement d'un échantillon d'eau dans une piscine d'un réacteur nucléaire ou dans un réservoir d'entreposage de combustible nucléaire, dans lequel on utilise un dispositif selon l'une quelconque des revendications 1 à 9.

## Patentansprüche

1. Vorrichtung (10) zur Entnahme einer Probe (21) einer Flüssigkeit, aufweisend:
- einen Behälter, der ein Gehäuse (12) aufweist, das durch eine Kappe (13, 16) verschlossen ist und mindestens eine Probennahmeflasche (20) enthält,
- mindestens eine Eintrittsleitung (22) für jede Probennahmeflasche, die die Kappe durchquert und mit ihrem unteren Ende (220) in die Flasche (20) mündet,
- mindestens eine Entlüftungsleitung (23), die die Kappe durchquert und deren oberes Ende (231) sich über das/die obere/n Ende/n (221) der Eintrittsleitung/en (22) hinaus erstreckt,
- für jede Eintrittsleitung ein erstes Verschlussorgan (24), wie etwa einen Stopfen, der erlaubt, das obere Ende (221) der Eintrittsleitung zu verschließen,
- mindestens ein erstes Rückziehorgan (31) des/der ersten Verschlussorgane/s der Eintrittsleitung/en, das mit dem/den genannten ersten Verschlussorgan/en verbunden ist und erlaubt, die Eintrittsleitung/en (22) zu öffnen, wenn die Probennahmevorrichtung (10) zur gewünschten Probennahmetiefe eingetaucht ist,
wobei die Vorrichtung (10) **dadurch gekennzeichnet ist, dass** sie für jede Flasche Dichtungsmittel (26) aufweist, die dafür angeordnet sind, die Flasche (20) vom Behälter (12, 13) zu isolieren und dadurch, dass für jede Flasche ein unteres Ende (230) der Entlüftungsleitung (23) unter der Mündung (202) der Flasche in die Flasche (20) mündet, derart, dass ermöglicht wird, in der Flasche oberhalb der entnommenen Flüssigkeit (21) der Flasche eine Gasdecke aufrechtzuerhalten und ein vollständiges Ausfüllen der Flasche durch die entnommene Flüssigkeit zu verhindern.

2. Vorrichtung nach Patentanspruch 1, in der die Dichtungsmittel ein Dichtungsorgan (26) aufweisen, insbesondere eine Dichtungsscheibe, die zwischen der Mündung (202) der Flasche (20) und der Kappe (13, 16) angeordnet und eingeklemmt werden kann.

3. Vorrichtung nach Patentanspruch 1 oder 2, in der die/jede Eintrittsleitung (22) mit ihrem oberen Ende (221) außerhalb des Behälters (12, 13, 16) mündet, und in der die/jede Entlüftungsleitung (23) mit ihrem oberen Ende (231) außerhalb des Behälters (12, 13, 16) mündet.

4. Vorrichtung nach irgendeinem der Patentansprüche 1 bis 3, in der für jede Flasche ein unteres Ende (230) der Entlüftungsleitung in der Flasche in Höhe des unteren Endes (220) der zugehörigen Eintrittsleitung (22) mündet, oder oberhalb des unteren Endes (220) der Eintrittsleitung.

5. Vorrichtung nach irgendeinem der Patentansprüche 1 bis 4, die für jede Entlüftungsleitung ein zweites Verschlussorgan (25), wie etwa einen Stopfen, aufweist, der erlaubt, das obere Ende der Entlüftungsleitung (23) zu verschließen, sowie ein zweites Rückziehorgan (33, 34) des/der zweiten Verschlussorgane/s der Entlüftungsleitung/en, das mit dem/den genannten zweiten Verschlussorgan/en verbunden ist und erlaubt, die Entlüftungsleitung/en (23) zu öffnen, wenn die Probennahmevorrichtung zur gewünschten Probennahmetiefe eingetaucht ist.

6. Vorrichtung nach Patentanspruch 5, in der das zweite Rückziehorgan (33, 34) mit dem (ersten) Rückziehorgan (31) - insbesondere starr - verbunden ist, derart, dass das/die Verschlussorgan/e der Eintrittsleitung/en und das/die Verschlussorgan/e der Entlüftungsleitung/en durch eine einzige Betätigung der Rückziehorgane (31 bis 34) durch einen Bediener geöffnet (bzw. geschlossen) werden können.

7. Vorrichtung nach irgendeinem der Patentansprüche 1 bis 6, die außerdem eine mit dem Behälter fest verbundene Aufhängekonstruktion (27 bis 30) aufweist, die die Handhabung und Positionierung der Vorrichtung (10) ermöglicht.

8. Vorrichtung nach Patentanspruch 7, in der mindestens ein Teil der Rückziehorgane (31, 33, 34) der Verschlussorgane der Leitungen (22, 23) an der Aufhängekonstruktion (27 bis 30) gleitend angebracht ist.

9. Vorrichtung nach irgendeinem der Patentansprüche 5 oder 6, in der der Teil des Stopfens 25, der zum Eindringen in den oberen Teil der Leitung 23 vorgesehen ist, im Längsschnitt die Form einer Spitze aufweist, die eine progressive Öffnung des Endes der Leitung 23 mit der fortschreitenden Entnahme dieses Teils des Stopfens aus der Leitung sicherstellt.

10. Verfahren zur Entnahme einer Probe einer Flüssigkeit, insbesondere der Entnahme einer Wasserprobe in einem Kernreaktorbecken oder einem Zwischenlagerbecken von Kernbrennstoffen, in dem eine Vorrichtung nach irgendeinem der Patentansprüche 1 bis 9 verwendet wird.

## Claims

1. A sampler device (10) for taking a sample (21) of a liquid, the device comprising:
• a container including a housing (12) closed by a cap (13, 16) and containing at least one sampling flask (20);
• at least one inlet duct (22) for each sampling flask, the inlet duct passing through the cap and opening out into the flask (20) via its bottom end (220) ;
• at least one exhaust duct (23) passing through the cap and having its top end (231) extending above the top end(s) (221) of the inlet duct(s) (22);
• for each inlet duct, a first closure member (24) such as a stopper, serving to shut the top end (221) of the inlet duct; and
• at least one first member (31) for withdrawing the first closure member(s) from the inlet duct(s), which member is connected to said first closure member(s) and serves to open the inlet duct(s) (22) when the device (10) is lowered to the desired sampling depth;
the device (10) being **characterized in that** it includes, for each flask, sealing means (26) arranged to isolate the flask (20) from the container (12, 13), and **in that**, for each flask, a bottom end (230) of the exhaust duct (23) opens out into the flask (20) below the opening (202) of the flask, so as to enable a gas blanket to be maintained in the flask above the sampled liquid (21) in the flask, and to prevent the flask being completely filled with the sampled liquid.

2. A device according to claim 1, wherein the sealing means include a sealing member (26), in particular flat gasket, that is arranged, and clamped, between the opening (202) of the flask (20) and the cap (13, 16) .

3. A device according to claim 1 or claim 2, wherein the or each inlet duct (22) opens out to the outside of the container (12, 13, 16) via its top end (221), and wherein the or each exhaust duct (23) opens out to the outside of the container (12, 13, 16) via its top end (231) .

4. A device according to any one of claims 1 to 3, wherein, for each flask, a bottom end (230) of the exhaust duct opens out into the flask at the level of the bottom end (220) of the corresponding inlet duct (22), or above the bottom end (220) of the inlet duct.

5. A device according to any one of claims 1 to 4, including, for each exhaust duct, a second closure member (25), such as a stopper, serving to shut the top end of the exhaust duct (23), and a second withdrawal member (33, 34) for withdrawing the second closure member(s), the second withdrawal member being connected to said second closure member(s) and serving to open the exhaust duct(s) (23) when the device is lowered to the desired sampling depth.

6. A device according to claim 5, wherein the second withdrawal member (33, 34) is connected, in particular rigidly connected, to the (first) withdrawal member (31), in such a manner that the closure member(s) of the inlet duct(s) and the closure member(s) of the exhaust duct(s) can be opened (or closed) by an operator performing a single action on the withdrawal members (31 to 34).

7. A device according to any one of claims 1 to 6, further including a suspension structure (27 to 30) secured to the container and enabling the device (10) to be handled and positioned.

8. A device according to claim 7, wherein at least a portion of the withdrawal members (31, 33, 34) for withdrawing the duct closure members (22, 23) is mounted to slide along the suspension structure (27 to 30).

9. A device according to any one of claims 5 or 6, wherein the portion of the stopper 25 that is designed to penetrate into the top portion of the duct 23 has a pointed shape in longitudinal section serving to open the end of the duct 23 progressively while this portion of the stopper is being moved out from the duct.

10. A method of taking a sample in a liquid, in particular taking a sample of water in a nuclear reactor pool or in a nuclear fuel storage tank, wherein use is made of a device according to any one of claims 1 to 9.
